Europäisches Patentamt

European Patent Office

Office européen des brevets

(11) Veröffentlichungsnummer: **0 123 237 B1**

(12) **EUROPÄISCHE PATENTSCHRIFT**

(45) Veröffentlichungstag der Patentschrift:
06.08.86

(51) Int. Cl.⁴: **G 02 B 6/34**

(21) Anmeldenummer: 84104247.6

(22) Anmeldetag: 14.04.84

(54) Optischer Multiplexer bzw. Demultiplexer.

(30) Priorität: 23.04.83 DE 3314820

(43) Veröffentlichungstag der Anmeldung:
31.10.84 Patentblatt 84/44

(45) Bekanntmachung des Hinweises auf die Patenterteilung:
06.08.86 Patentblatt 86/32

(84) Benannte Vertragsstaaten:
DE FR GB IT SE

(56) Entgegenhaltungen:
EP - A - 0 062 429
EP - A - 0 073 314
EP - A - 0 074 152
GB - A - 1 500 257

PATENTS ABSTRACTS OF JAPAN, Band 4, Nr.
160(P-35)(642), 8. November 1980, Seite 64P35

(73) Patentinhaber: Licentia Patent-Verwaltungs-GmbH,
Theodor-Stern-Kai 1, D-6000 Frankfurt/Main 70 (DE)

(72) Erfinder: Hillerich, Bernd, Dipl.-Phys., Burgunderweg 9,
D-7900 Ulm (DE)
Erfinder: Rode, Manfred, Dipl.-Ing., Ahornweg 3,
D-7900 Ulm-Unterweiler (DE)

(74) Vertreter: Schulze, Harald Rudolf, Dipl.-Ing. et al,
Licentia Patent-Verwaltungs-GmbH
Theodor-Stern-Kai 1, D-6000 Frankfurt/Main 70 (DE)

# Beschreibung

Die Erfindung betrifft einen optischen Multiplexer bzw. Demultiplexer nach dem Oberbegriff des Patentanspruchs 1.

Ein solcher Demultiplexer ist bekannt aus der Zeitschrift „Electronics Letters", März 1982, Vol 18, Nr. 6, Seiten 257 bis 258. Ein Multiplexer unterscheidet sich davon lediglich durch die Umkehr des Strahlenganges. Derartige Multiplexer bzw. Demultiplexer werden benutzt zur optischen Nachrichtenübertragung im Wellenlängenmultiplexbetrieb über Lichtwellenleiter. Bei mehr als vier Nachrichtenübertragungskanälen sind Multiplexer und Demultiplexer mit einem optischen Beugungsgitter die optimale Lösung. Derartige Multiplexer bzw. Demultiplexer bestehen aus meist zu einer parallelen Anordnung zusammengefassten Eingangs- und/oder Ausgangslichtwellenleitern (Faserarrays), einem als fokussierendes bzw. kollimierendes Element dienendem Linsensystem, der Abbildungsoptik, und dem zur Wellenlängenselektion benutzten Beugungsgitter.

Zur Erzielung optimaler Übertragungseigenschaften und zur Einstellung der gewünschten Übertragungswellenlänge ist es nötig, die Lage der Lichtwellenleiter und des Beugungsgitters in fünf Freiheitsgraden zu justieren und anschliessend gegen mechanische Verschiebungen zu sichern, z.B. durch Klebstoff. Diese Justage ist in der Regel zeitaufwendig und unwirtschaftlich.

Aufgabe der Erfindung ist es daher, einen optischen Multiplexer bzw. Demultiplexer anzugeben, der wirtschaftlich herstellbar ist und der mechanisch robust sowie störungsunanfällig ist.

Diese Aufgabe wird erfindungsgemäss gelöst durch die im kennzeichnenden Teil des Patentanspruchs 1 angegebenen Merkmale. Ausgestaltungen und Weiterbildungen sind den Unteransprüchen entnehmbar.

Die Erfindung beruht auf der Erkenntnis, dass es möglich ist, den Multiplexer bzw. Demultiplexer derart aufzubauen, dass die erwähnten fünf mechanischen Freiheitsgrade nahezu unabhängig voneinander justierbar sind. Die jeweilige Justierung ist arretier- und/oder festlegbar, z.B. durch Kleben, Löten und/oder Schraubverbindungen. Dieser Justiervorgang erfolgt bei gleichzeitiger Prüfung der optischen Funktionsfähigkeit des vollständigen Multiplexers bzw. Demultiplexers.

Die Erfindung wird im folgenden anhand eines Ausführungsbeispieles näher erläutert unter Bezugnahme auf eine schematische Zeichnung.

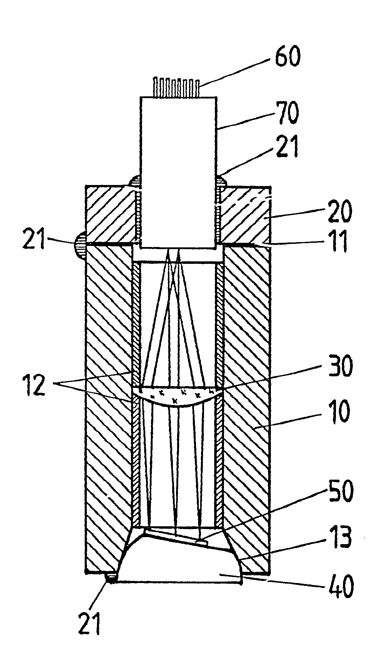

Die Figur zeigt einen vollständigen Multiplexer bzw. Demultiplexer, dessen Strahlengang durch Pfeile dargestellt ist. Das hohlzylinderförmige Gehäuse besteht aus einem ersten Gehäuseteil 10 und einem zweiten Gehäuseteil 20. Die Gehäuseteile besitzen einen kreisringförmigen Querschnitt und bestehen aus einem Material, z.B. Invar und/oder Keramik, das im Arbeitstemperaturbereich des Multiplexers bzw. Demultiplexers einen vernachlässigbaren temperaturabhängigen Ausdehnungskoeffizienten besitzt. Beide Gehäuseteile sind durch eine Fügestelle 11 in radialer Richtung gegeneinander verschiebbar. In dem ersten Gehäuseteil 10 ist eine Abbildungsoptik 30, z.B. eine sphärische Linse angebracht durch Einschubhülsen 12. Bei dem ersten Gehäuseteil 10 ist das der Fügestelle 11 abgewandte Ende 13 mit einer Fase (Abschrägung) versehen zur Aufnahme eines Trägers 40, z.B. einer Kugel. Die Kugel besitzt eine im wesentlichen ebene Fläche, auf welcher das Reflexionsbeugungsgitter 50 befestigt ist, z.B. durch Kleben. Die Ein- und/oder Ausgangslichtwellenleiter sind zu einem sogenannten Faserarray 60 zusammengefasst, das z.B. durch Vergiessen mit Epoxydharz in einer Hülse 70 befestigt ist. Die Hülse 70 befindet sich in dem zweiten Gehäuseteil 20 und ist in axialer Richtung verschiebbar sowie um die Längsachse drehbar. Die beschriebene Anordnung ermöglicht eine nahezu unabhängige Justierung der eingangs erwähnten Freiheitsgrade. Nach erfolgter Justierung sind die gegeneinander beweglichen Teile der Anordnung arretier- und/oder festlegbar, z.B. durch Klebe- und/oder Lötstellen 21.

Zur Justierung (Demultiplexerbetrieb) wird in den Eingangslichtwellenleiter Licht mit zeitlich veränderlicher Wellenlänge eingekoppelt. Durch an die Ausgangslichtwellenleiter angekoppelte Fotodetektoren, sowie eine daran angeschlossene Auswerteeinheit, ist der jeweils durchgeführte Justiervorgang prüf- und optimierbar.

Es ist möglich, das Faserarray 60 so auszubilden, dass Ein- und Ausgangslichtwellenleiter jeweils zunächst voneinander unabhängige Arrays bilden. Diese Arrays sind über- oder nebeneinanderlegbar, so dass das Faserarray 60 entsteht. Die Klebe- und/oder Lötstellen 21 sind derart ausführbar, dass der Multiplexer bzw. Demultiplexer im wesentlichen gas- und/oder dampfdicht ist. Dadurch ist es sogar möglich, den Innenraum zu evakuieren oder mit einem Schutzgas zu füllen.

Weiterhin ist es möglich, statt der beispielhaften Klebe- und/oder Lötstellen 21 andere mechanische Verbindungsarten zu wählen, z.B. eine verschraubbare Flanschverbindung der ersten und zweiten Gehäuseteile.

## Patentansprüche

1. Optischer Multiplexer bzw. Demultiplexer, bestehend aus einer Hintereinanderanordnung von einem Faserarray, das Ein- und Ausgangslichtwellenleiter enthält, einer Abbildungsoptik sowie einem Reflexionsbeugungsgitter, gekennzeichnet durch folgende Merkmale:

a) es ist ein hohlzylinderförmiges Gehäuse vorhanden, bestehend aus mindestens einem ersten Gehäuseteil (10), mindestens einem zweiten Gehäuseteil (20) und einer Fügestelle (11), die eine radiale Verschiebung und/oder Verdrehung der Gehäuseteile (10, 20) zueinander ermöglicht;

b) in dem ersten Gehäuseteil (10) ist die Abbildungsoptik (30) angebracht;

c) an dem der Fügestelle (11) abgewandten Ende (13) des ersten Gehäuseteils (10) ist das Reflexionsbeugungsgitter (50) dreh- und/oder kippbar angeordnet;

d) das Faserarray (60) ist in einer Hülse (70) angebracht, die in dem zweiten Gehäuseteil (20) drehbar und/oder axial verschiebbar und arretierbar angeordnet ist.

2. Optischer Multiplexer bzw. Demultiplexer nach Anspruch 1, dadurch gekennzeichnet, dass das Reflexionsbeugungsgitter (50) auf einem Träger (40) angebracht ist, welcher durch mindestens eine Kugelfläche dreh- und/oder kippbar ist.

3. Optischer Multiplexer bzw. Demultiplexer nach Anspruch 2, dadurch gekennzeichnet, dass der Träger (40) aus einem Kugelteil besteht mit einer im wesentliche,n ebenen Fläche, auf welcher das Reflexionsbeugungsgitter (50) angebracht ist.

4. Optischer Multiplexer bzw. Demultiplexer nach einem der vorhergehenden Ansprüche, dadurch gekennzeichnet, dass die Ein- bzw. Ausgangslichtwellenleiter jeweils als Ein- bzw. Ausgangsfaserarray ausgebildet sind, die relativ zueinander ausrichtbar sind.

5. Optischer Multiplexer bzw. Demultiplexer nach einem der vorhergehenden Ansprüche, dadurch gekennzeichnet, dass Befestigungsmittel vorhanden sind zur Sicherung beweglicher Teile.

6. Optischer Multiplexer bzw. Demultiplexer nach Anspruch 5, dadurch gekennzeichnet, dass als Befestigungsmittel Klebe- und/oder Löt- und/oder Schraubverbindungen vorhanden sind.

7. Optischer Multiplexer bzw. Demultiplexer nach einem der vorhergehenden Ansprüche, dadurch gekennzeichnet, dass zumindest das Gehäuse aus einem Material besteht, das im nutzbaren Temperaturbereich einen vernáchlässigbaren Ausdehnungskoeffizienten besitzt.

8. Optischer Mutiplexer bzw. Demultiplexer nach einem der vorhergehenden Ansprüche, dadurch gekennzeichnet, dass der Innenraum des Gehäuses im wesentlichen gas- und/oder dampfdicht verschliessbar ist.

## Revendications

1. Multiplexeur ou démultiplexeur optique, constitué de la disposition l'un après l'autre d'un alignement d'extrémités de fibres, contenant des guides d'ondes lumineuses d'entrée et de sortie, d'une optique de reproduction et d'un réseau de diffraction à réflexion, caractérisé en ce que:

a) il comprend un corps cylindrique creux composé d'au moins une première partie (10), d'au moins une seconde partie (20) et d'un joint (11) qui permet le déplacement radial et/ou la rotation des parties (10, 20) du corps l'une par rapport à l'autre;

b) l'optique de reproduction (30) est logée dans la première partie (10) du corps;

c) le réseau de diffraction à réflexion (50) est disposé rotatif et/ou basculant sur l'extrémité (13) de la première partie (10) éloignée du joint (11);

d) l'alignement d'extrémités de fibres (60) est logé dans une douille (70) montée rotative et/ou axialement déplaçable et bloquable dans la seconde partie (20) du corps.

2. Multiplexeur ou démultiplexeur optique selon la revendication 1, caractérisé en ce que le réseau de diffraction à réflexion (50) est disposé sur un support (40) qui est rotatif et/ou basculant grâce à au moins une surface sphérique.

3. Multiplexeur ou démultiplexeur optique selon la revendication 2, caractérisé en ce que le support (40) est formé d'un élément sphérique possédant une surface essentiellement plane sur laquelle est disposé le réseau de diffraction à réflexion (50).

4. Multiplexeur ou démutiplexeur optique selon une des revendications précédentes, caractérisé en ce que les guides d'ondes lumineuses d'entrée et les guides d'ondes lumineuses de sortie sont réunis chaque fois dans un alignement d'extrémités de fibres d'entrée, respectivement dans un alignement d'extrémités de fibres de sortie, qui peuvent être orientés l'un par rapport à l'autre.

5. Multiplexeur ou démultiplexeur optique selon une des revendications précédentes, caractérisé en ce que des moyens de fixation sont prévus pour immobiliser des parties déplaçables.

6. Multiplexeur ou démultiplexeur optique selon la revendication 5, caractérisé en ce que les moyens de fixation sont constitués par des assemblages collés et/ou soudés et/ou vissés.

7. Multiplexeur ou démultiplexeur optique selon une des revendications précédentes, caractérisé en ce que son corps au moins est réalisé d'un matériau qui possède un coefficient de dilatation thermique négligeable dans la plage de température utile.

8. Multiplexeur ou démultiplexeur optique selon une des revendications précédentes, caractérisé en ce que l'intérieur de son corps peut être fermé essentiellement étanche au gaz et/ou à la vapeur.

## Claims

1. Optical multiplexer or demultiplexer consisting of an arrangement one behind the other of a fibre array which contains input and output light wave guides, an imaging optical system as well as a reflecting diffraction grating, characterised by the following features:

a) a hollow, cylindrical shaped housing is present, consisting of at least one first housing part (10), at least one second housing part (20) and a joint location (11), which makes a radial displacement and/or rotation of the housing parts (10, 20) each relative to the other possible;

b) the imaging optical system (30) is mounted in the first housing part (10);

c) the reflecting diffraction grating (50) is rotatably and/or tiltably arranged at that end (13) of the first housing part (10), which is remote from the joint location (11);

d) the fibre array (60) is mounted in a sleeve (70), which is rotatably and/or axially displaceably and fixably arranged in the second housing part (20).

2. Optical multiplexer or demultiplexer according to claim 1, characterised thereby, that the reflecting diffraction grating (50) is mounted on a carrier (40), which is rotatable and/or tiltable due to at least one spherical surface.

3. Optical multiplexer or demultiplexer according to claim 2, characterised thereby, that the carrier (40) consists of a spherical part with a substantially planar surface, on which the reflecting diffraction grating (50) is mounted.

4. Optical multiplexer or demultiplexer according to one of the preceding claims, characterised thereby, that the input and output light wave guides are each constructed as input or output fibre array, respectively, which are alignable each relative to the other.

5. Optical multiplexer or demultiplexer according to one of the preceding claims, characterised thereby, that fastening means are present for the securing of movable parts.

6. Optical multiplexer or demultiplexer according to claim 5, characterised thereby, that adhesive and/or soldered and/or threaded connections are present as fastening means.

7. Optical multiplexer or demultiplexer according to one of the preceding claims, characterised thereby, that at least the housing consists of a material which has a negligible co-efficient in the usable temperature range.

8. Optical multiplexer or demultiplexer according to one of the preceding claims, characterised thereby, that the interior space of the housing is closable in substantially gas-tight and/or vapour-tight manner.